# EUROPEAN PATENT SPECIFICATION

(11) **EP 1 484 148 B1**
(45) Date of publication and mention of the grant of the patent: **30.05.2007**
(21) Application number: 04076640.4
(22) Date of filing: 04.06.2004
(51) Int. Cl.: B29C 35/08, B29C 47/88, B29C 33/36

(54) **UV cure resin molding method**
Formgebungsverfahren eines UV-härtenden Harzes
Procédé de moulage d'une résine durcissable par UV

(30) Priority: 06.06.2003 US 456021
(43) Date of publication of application: 08.12.2004
(73) Proprietor: CROWN Packaging Technology, Inc., Alsip, IL 60803-2599 (US)
(72) Inventor: Marple, Melvyn G, Watertown, CT 06795 (US); Lowder, Scott Byerley, Orange, CT 06477 (US)
(74) Representative: Smith, Debra Jane Clare

(56) References cited:
- EP-A- 0 600 106
- DE-A- 19 705 303
- US-A- 3 102 303
- US-A- 5 885 514
- US-A- 5 916 509
- US-A1- 2002 056 930
- US-A1- 2002 185 761
- PATENT ABSTRACTS OF JAPAN vol. 0090, no. 87 (M-372), 17 April 1985 (1985-04-17) -& JP 59 215838 A (MITSUBISHI DENKI KK), 5 December 1984 (1984-12-05)

## Description

The present invention relates to a method for manufacturing plastic resin components. More specifically, this invention relates to a method of molding plastic resins using ultraviolet ("UV") cure technology.

Traditional molding methods involve injection molding and extrusion methods where a polymer is heated to a plastic state, then formed in a mold or die, then cooled to form a finished product. As such, the mold must be made from a substrate that is able to withstand these pressure and temperature changes. Often, molds are made of high strength steels and are expensive to produce. There remains a need for an efficient molding method with fewer production steps and reduced time for forming the finished product. The mold or die should be produced from a wider array of substrates to reduce costs and increase versatility of mold designs.

UV cure technology is used in both industrial and decorative applications. The technology involves a photopolymerization process that fuses resin molecules together to form molecular chains. UV curing is widely used in paints, inks and varnishes. UV cure coatings are often used to provide scratch-resistance and durability to the surface of products such as digital versatile discs (DVDs), golf balls, and guitar bodies, providing a smooth, attractive appearance to these products. UV cure adhesives and sealants are also widely used. They provide quick bonding due to their ability to cure rapidly, in seconds, with a clear, colorless appearance. The viscosity of the UV cure adhesive can be varied depending upon the application. They provide a strong durable bond for a wide variety of substrates, including glass, plastics, wood, ceramics and paper. The UV cure process produces strong durable bonds in seconds without the use of solvents, providing an efficient and environmentally-friendly. Further, cationic adhesives that have been developed continue to cure after the light source is removed providing an even greater finished cure strength.

While UV cure resins have been used to form coatings and adhesives, they have not generally been used in molding applications. Several examples are now described.

US 5,916,509 entitled ACTINIC IRRADIATION AND CURING OF PLASTIC COMPOSITES WITHIN A MATERIAL FORMING DIE by Duhrman states that uncured thermoset composite reactants containing ultraviolet curable reagents may be effectively cured by pultrusion using a unique molding die which uniformly irradiates the uncured composites contained within the die.

DE 197 05 303 A1, PRODUCTION OF SMALL AND MICRO-PARTS, by Juergen Hauselt et al concerns the production of small and micro-parts made of a moulding composition and comprises: (a) evacuating the mould with integrated mould insert; (b) placing the moulding composition into the mould under pressure where a low viscosity moulding composition is used, which contains a component hardenable by short wave light; (c) irradiating with short wave light while maintaining a post pressure to completely harden the composition; and (d) opening the mould and removing the moulding.

In US 5,885,514 entitled AMBIENT UVL-CURABLE ELASTOMER MOLD APPARATUS, by Paul M. Tensor, an improved process for molding parts such as gaskets using an injection molding machine is described. Here the molding machine includes upper and lower mold plates which are transparent to UV light and have pattern recesses of differing sizes and spaced apart locations, a UV light source, and a low pressure injection system for delivering elastomers to the mold plates.

In MOLDING APPARATUS, JP 59215838, by Nishiyama Hideo, an ultraviolet ray hardening molding material is injected into a die from an injection molding machine to fill the space between a cavity core. Then ultraviolet rays irradiate the cavity and the cavity core separately via an optical fiber from an ultraviolet ray irradiation source.

It is an object of the invention to provide a method and system for manufacturing molded articles using UV curing systems. It is an object of the invention to provide substantial improvements in manufacturing molded articles, including elimination of heating and cooling of molds as is typically required of injection molding methods; decreasing energy consumption; reducing molding pressures; allowing use of lower cost mold materials; reducing material waste; and providing greater manufacturing flexibility.

UV cure technology is an efficient means of molding materials as it involves low energy consumption. Productivity is improved as exposure to mere seconds of UV light initiates cure. Unlike other molding processes, UV cure technology is environmentally-friendly as it does not require use solvents. It does not require the heating and cooling or applying pressure to mold the material. This results in a minimal cavity space and increased gate size. As temperature is controlled, molds may be made from a wider variety of substrates, including heat sensitive materials, and is not limited to high strength steels. Additionally, there is no shrinking, warping or occurrence of voids as in traditional molding processes. Therefore, molding of UV curable material is ideal for manufacturing articles or components of an aesthetic nature.

The method of manufacturing molded articles in accordance with the invention as disclosed in claim 1 comprises providing a mold or die at least substantially enclosing a cavity therein, filling the mold or die with a UV curable material, and exposing the UV curable material to a UV light source of a sufficient intensity and for a sufficient time to cure said UV curable material to a solid mass contained in said mold or die. In preferred embodiments, the mold is formed of a plurality of mold segments that can be fitted together to form the mold and separated from each other to release a manufactured product from the mold. The UV curable material is exposed to the UV light source either through an opening in the top of the mold or through UV transparent ports, panels or portions of the mold. In one embodiment, the entire mold may be UV transparent. The UV light may be directed at the UV curable material through one or more such ports.

Other objects, aspects and features of the present invention in addition to those mentioned above will be pointed out in or will be understood from the following detailed description provided in conjunction with the accompanying drawings.
FIG. 1 is a side elevation cross-sectional view of an embodiment of a mold for use in the method of the invention.
FIG. 2 is a side elevation cross-sectional view of a second embodiment of a mold for use in the method of the invention.
FIG. 3 is a side elevation cross-sectional view of a third embodiment of a mold for use in the method of the invention.
FIG. 4 is a top plan view of a system in accordance with an embodiment of the method of the invention.
FIG. 5 is a schematic view of an extension system in accordance with another embodiment of the method of the invention.

Generally, the invention comprises the steps of: providing at least one mold of a desired shape or design having a cavity therein; filling the cavity with a UV curable material; and exposing the UV curable material to a UV light source of a sufficient intensity and for a sufficient time to cure the UV curable material to a solid mass contained in the cavity.

The mold may be made of any material suitable for the application. The mold is filled with UV curable material by a precision dispensing system. The mold may have an interior coating to prevent sticking of the UV material, once cured to a solid mass, to the inside of the mold and to facilitate release of the solid mass from the mold.

The UV curable material is limited in that it must transmit UV light, and therefore, cannot be opaque. The UV curable material may be pigmented or tinted. The UV curable material can be selected from a number of different UV curable polymer systems. A UV curable polymer system typically comprises 1-3% of a photoinitiators; 15-60% of reactive diluents, 25%-90% of an oligomer polymer; and 1-50% of additives and fillers. Polymers used in UV curable polymer systems can include polyurethanes, epoxies, polyesters and acrylates. Specific commonly used monomers for the polymer include N-vinylpyrrolidone, hydroxyethylacrylate, (poly)ethyleneglycol diacrylate, trimethylol-propanetriacrylate, norbornylacrylate, and styrene. Another suitable polymer system is the thiol-ene polymer system (also known as mercaptoesters). Commercially available UV curable polymer systems include products from Master Bond, Inc., Hackensack, New Jersey, Tangent Industries, winsted, Connecticut; Daicel Chemical Industries, Ltd., Sakai Osaka Japan, and Ctech LLC, New Hartford, Connecticut. A suitable thiol-ene polymer system is available from Ctech, LLC. The preferred UV curable liquid is a product that when cured will have good optical qualities, as this is typically indicative of the finish and look desired in the method of the invention. These products are typically cured at ambient temperatures, or at temperatures at or below 100 °C using a UV light source. Typical cure times range from 5 seconds to 5 minutes depending upon the wave length and intensity of the UV light and the thickness being cured.

One preferred UV curable liquid is an acrylate formulation. One commercially available formulation that could be used in the invention is the Ctech 8166-4A formulation, which can be cured to a tack free surface with 5 minutes UV exposure at 100 °C.

A preferred UV light source is a UV lamp providing a UV intensity of about 115 mw/cm2 at 365 nm. The UV light source desirably provides a broad range of wavelengths

Another preferred UV curable liquid is thiol-ene polymer system. One commercially available formulation that might be used in the invention is the Ctech Hard Dome Coat formulation, which preferably is cured at a lower intensity UV light in the range of 30 mW/cm2 with 5 minutes UV exposure at 100 °C.

Additional components may optionally be incorporated into the UV curable material. These ingredients include, but are not limited to particles of cloth, wood, or newspaper, metal flakes, or the like. These ingredients may enhance the aesthetics and/or physical properties, such as strength, of the resulting molded article. The UV curable material may be tinted or pigmented to result in a translucent tinted article.

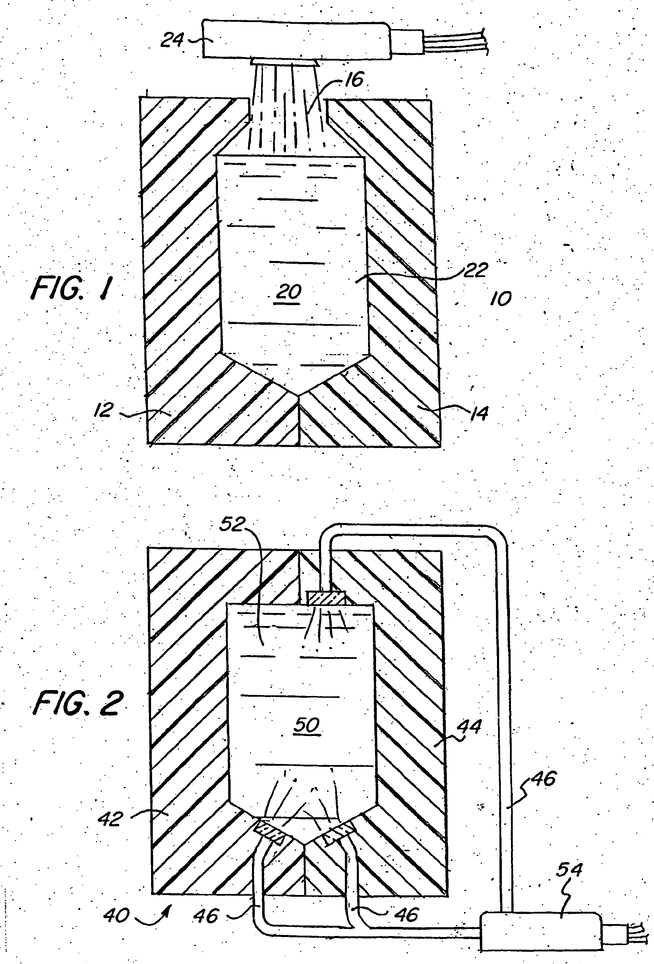

The design of the mold and cavity must allow for direct illumination of the UV curable material by the UV light source. This may be achieved by various means, such as providing an opening in the upper end of the mold to direct UV light into the mold cavity, so long as the light entering from the opening exposes all of the interior surfaces of the mold. In one embodiment of the present invention shown in FIG. 1, the mold 10 comprises two mold segments 12 and 14 with an opening 16 at the top of mold 10. The segments are closed together to form a cavity 20 that is filled with an UV curable material 22. A UV light source 24 shutters light through the opening to cure the UV curable material. The mold segments 12 and 14 are then separated to release the molded article or component as discussed hereafter. Multiple molds may be exposed to the same UV light source at the same time, therefore allowing curing of multiple molded components at once.

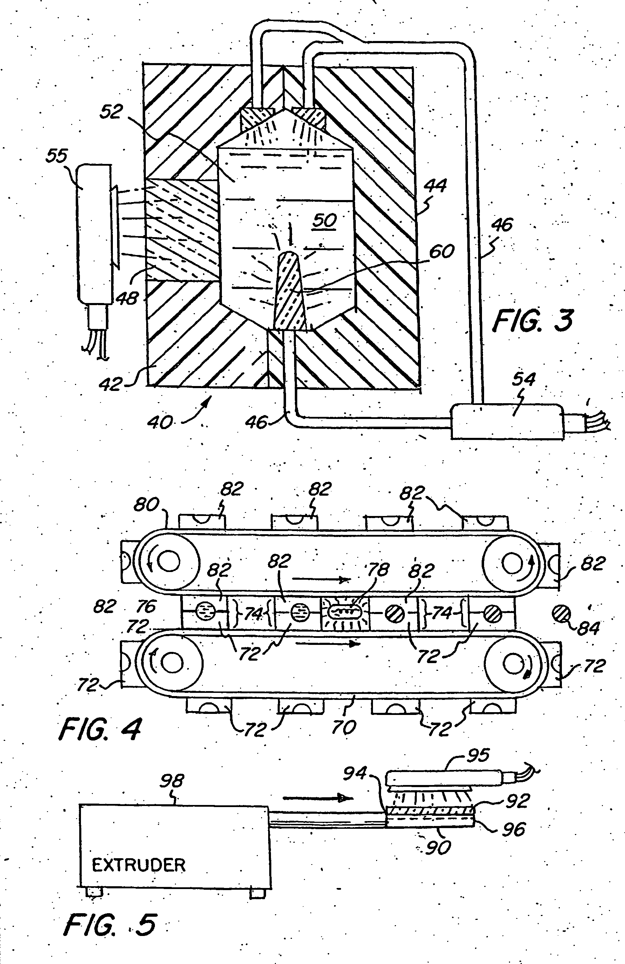

In an alternative embodiment shown in FIGS. 2 and 3, the mold 40 need not have an opening and UV light may be introduced into the cavity 50 through the walls of the mold 40 segments 42 and 44. The UV light can be provided by a UV light source 54 positioned to irradiate all of the cavity with UV light; or there can be multiple UV light sources 54 positioned to irradiate the cavity with UV light. A fiber optic or other light transmitting system 46 may be disposed in the mold itself to pass light into the cavity 50 of the mold 40 to illuminate the cavity 50. In the case of a larger mold, it may be desirable to have UV light is provided to the cavity by UV light transmission through a plurality of optical fibers 46 positioned to deliver UV light to a plurality of positions in the mold as shown in FIGS. 2 and 3.

As shown in FIG. 3, the mold 40 itself may be made, at least in part, of a UV transmissible material so light from UV lamp 55 on the exterior of the mold will be transmitted through the mold 40. In one potential embodiment, the entire mold may be made of a UV transmissible material. Illumination of the UV material within the mold 40 is achieved in the various embodiments described herein. Mold 40 in FIG. 3 comprises a plurality of mold segments 42 and 44 which are positioned and collapsed together to render the desired cavity shape and/or configuration for injecting and curing the UV curable material, i.e., vertical or horizontal molding. At least one of the mold segments 42 is made of UV transmissible material to allow for illumination of the cavity; alternatively, the mold segment has a "window" 48 through which UV light is introduced. The cavity is filled with UV curable material 52, by suitable means such as injection and the like, and exposed to UV light source through the window 48 made of UV transmissible material. In this embodiment, as an opening in the mold need not be provided to allow UV light illumination, the shape and design possibilities of the article or component increase and a cored or threaded article or component may easily be produced.

In another embodiment shown in FIG. 4, simultaneous manufacturing of multiple molded articles is provided by two conveyors 70 and 80 positioned horizontally and parallel to each other are provided, moving in the same direction at a desired speed. Mold segments 72 and 82 are placed on both conveyors so that they travel down one side and back the other, aligned as pairs with segments on the opposite conveyor. As each segment 72 travels down one conveyor 70, it interlocks with a segment 82 on the other parallel conveyor 80, forming a mold 74 having a cavity. The mold 74 travels beneath a filling station 76 which dispenses a UV curable material into the mold cavity. As the mold 74 continues to travel along the conveyor belt, the cavity is then exposed to a UV light source 78 to cause curing. As the mold continues to the end of the conveyors, the cured article or component 84 is released from the cavity as the segments 72 and 82 separate from one another. The article may drop into bulk as finished product or be transferred to the next manufacturing step.

In any of the previously discussed embodiments, a core 60 is included in the mold to form hollow articles and/or articles with shaped internal chambers as shown in FIG. 3. The core 60 must be made from a material capable of transmitting UV light so as to allow for cure of the UV curable material within the cavity. A UV transmittable core 60 allows UV light to transmit through the core 60 and cure potentially blocked or shaded areas of the mold. In one potential embodiment, the core has a UV light source (including for example, a fiber optic output) embedded in the core to provide UV curing within the mold.

The core 60 may also be a collapsible core that can be provided in the mold in an expanded or inflated state. Such a collapsible core could be made of a flexible polymeric material or a series of interfitting parts. After the article or component is cured, the core 60 is collapsed or deflated so that it is smaller than the entry point and can be removed from within the molded article. The collapsible core would be designed to form the desired internal geometry of the resulting article. An article, such as a bottle, could be manufactured using this method with the advantage of the ability to decorate or stamp the bottle prior to removal of the collapsible core.

Referring now to FIG. 5, Another aspect of the present invention is a method of forming an extruded product using a UV curable liquid. The extrusion method of the present method involves providing a die 90 of a desired configuration with a UV transmissible wall 92 (for example, a top plate), an entry aperture 94, and a discharge end 96. A UV curable material is injected into the die through the entry aperture using injection molding machine 98. The UV transmissible wall 92 is illuminated with UV light source 95 of sufficient intensity and for a sufficient period to cure the UV curable material. Pressure from the injection molding machine 98 is applied to the UV curable material causing it to exit the die as a solid mass through the die discharge end 96. Optionally, a mechanism may be provided to remove the cured article from the discharge end.

The present invention is expected to provide a method and system which will provide substantial improvements in manufacturing molded articles, including: (1) improved energy efficiency due to the elimination of requirements for mold heating and cooling of molds as is typically required of injection molding methods; (2) improved capital cost because the method allows zero pressure molding, thus eliminating the need for high strength steel molds, and allowing use of molds which are made of less expensive materials and which are less expensive to fabricate; (3) improved operating cost by reducing material waste and providing greater manufacturing flexibility.

While UV cure resins have been used to form coatings and adhesives, they have not generally been used in molding applications. UV cure technology is an efficient means of molding materials as it involves low energy consumption. Productivity is improved as exposure to mere seconds of UV light initiates cure. Unlike other molding processes, UV cure technology is environmentally-friendly as it does not require use solvents. It does not require the heating and cooling or applying pressure to mold the material. This results in a minimal cavity space and increased gate size. As temperature is controlled, molds may be made from a wider variety of substrates, including heat sensitive materials, and is not limited to high strength steels. Additionally, there is no shrinking, warping or occurrence of voids as in traditional molding processes. Therefore, molding of UV curable material is ideal for manufacturing articles or components of an aesthetic nature.

## Claims

1. A method of manufacturing a molded article, comprising the steps of:
- providing a mold (10, 40) wherein at least a portion of the mold (10, 40) comprises a UV transmissible material and which at least substantially encloses a cavity (20, 50) therein;
- disposing at least one core (60) within the cavity (20,50) wherein the core (60) is formed of a UV transmittable material.
- filling the cavity with a UV curable material (22, 52); and
- exposing the UV curable material (22, 52) to UV light of a sufficient intensity and for a sufficient time to cure the UV curable material to a solid mass contained in the cavity and formed about the core (60) to form a hollow article having at least one shaped, internal chamber.

2. The method of claim 1, wherein the mold (10, 40) comprises a plurality of mold segments (12, 14, 42, 44) which fit together to define a cavity (20, 50).

3. The method of claim 1 or claim 2 wherein the UV light is provided by one or more UV light sources (24) positioned to irradiate all of the cavity (20, 50) with UV light.

4. The method of claim 3, wherein the UV light is provided to the cavity by UV light transmission through one or more optical fibers (46).

5. The method of any one of the preceding claims, wherein the core (60) is collapsible.

6. The method of any one of claims 2 to 5, wherein the mold segments (72, 82) are mounted to a conveying system moving said mold segments (72, 82) from a mold filling station to a UV curing zone to a mold unloading station.

## Patentansprüche

1. Verfahren zur Herstellung eines geformten Gegenstands, das folgende Schritte umfasst:
- Bereitstellen einer Form (10, 40), wobei mindestens ein Teil der Form (10, 40) ein UV-durchlässiges Material umfasst und die mindestens im Wesentlichen einen Hohlraum (20, 50) darin einschließt;
- Anordnen mindestens eines Kerns (60) im Hohlraum (20, 50), wobei der Kern (60) aus einem UV-übertragbaren Material gebildet ist.
- Füllen des Hohlraums mit einem UV-härtenden Materials (22, 52); und
- Belichten des UV-härtenden Materials (22, 52) mit UV-Licht ausreichender Intensität und für eine ausreichende Zeit, um das UV-härtende Material zu einer massiven Masse zu härten, die im Hohlraum enthalten ist und um den Kern (60) herum gebildet wird, um einen hohlen Gegenstand zu formen, der mindestens eine geformte innere Kammer aufweist.

2. Verfahren nach Anspruch 1, wobei die Form (10, 40) eine Mehrheit von Formsegments (12,14,42, 44) aufweist, die zusammenpassen, um einen Hohlraum (20, 50) zu definieren.

3. Verfahren nach Anspruch 1 oder Anspruch 2, wobei das UV-Licht durch eine oder mehrere UV-Lichtquellen (24) bereitgestellt wird, die positioniert sind den ganzen Hohlraum (20, 50) mit UV-Licht zu bestrahlen.

4. Verfahren nach Anspruch 3, wobei das UV-Licht dem Hohlraum durch UV-Lichtübertragung durch eine oder mehrere optische Fasern (46) bereitgestellt wird.

5. Verfahren nach einem beliebigen der vorherigen Ansprüche, wobei der Kern (60) zusammenfallbar ist.

6. Verfahren nach einem beliebigen der Ansprüche 2 bis 5, wobei die Formsegments (72, 82) auf einem Fördersystem montiert sind, das besagte Formsegmente (72, 82) von einer Formfüllstation zu einer UV-härtenden Zone zu einer Entladestation bewegt.

## Revendications

1. Une méthode de fabrication d'un article moulé comprenant les étapes de :
- fourniture d'un moule (10, 40), selon lequel au moins une portion du moule (10, 40) comprend un matériau transmissible des UV et qui au moins sensiblement, ceint une cavité (20, 50) dans le moule ;
- dépôt d'au moins un noyau (60) au sein de la cavité (20, 50), ledit noyau (60) étant formé d'un matériau transmissible des UV.
- remplissage de la cavité d'un matériau durcissable par UV (22, 52); et
- exposition du matériau durcissable par UV (22, 52) à de la lumière à ultraviolet d'une intensité suffisante et pendant une durée suffisante pour durcir le matériau durcissable par UV jusqu'à l'obtention d'une masse solide contenue dans la cavité et disposée autour du noyau (60) pour former un article creux ayant au moins une chambre interne formée.

2. Méthode telle que décrite dans la revendication 1, selon laquelle le moule (10, 40) comporte une pluralité de segments de moule (12, 14, 42, 44) qui s'emboîtent pour définir une cavité (20, 50).

3. Méthode telle que décrite dans la revendication 1 ou la revendication 2, selon laquelle la lumière à ultraviolet est fournie par une ou plusieurs sources lumineuses à ultraviolet (24) positionnées de manière à irradier toute la cavité (20, 50) avec la lumière à ultraviolet.

4. Méthode telle que décrite dans la revendication 3, selon laquelle la lumière à ultraviolet est fournie à la cavité par la transmission de la lumière à ultraviolet par le biais d'une ou de plusieurs fibres optiques (46).

5. Méthode telle que décrite dans l'une quelconque des revendications précédentes, selon laquelle le noyau (60) est démontable.

6. Méthode telle que décrite dans l'une quelconque des revendications 2 à 5, selon laquelle les segments de moule (72, 82) sont montés dans un système de transport déplaçant lesdits segments de moule (72, 82) depuis un poste de remplissage du moule à une zone durcissable par UV jusqu'à un poste de déchargement du moule.
